# FASCICULE DE BREVET EUROPEEN

(11) **EP 2 512 308 B1**
(45) Date de publication et mention de la délivrance du brevet: **17.07.2013**
(21) Numéro de dépôt: 10799111.9
(22) Date de dépôt: 25.11.2010
(51) Int. Cl.: A47J 37/06, A47J 37/07

(54) **BARBECUE À GAZ**
GASGRILLER
GAS BARBEQUE

(30) Priorité: 16.12.2009 FR 0959050
(43) Date de publication de la demande: 24.10.2012
(73) Titulaire: Application des Gaz, 69230 Saint-Genis Laval (FR)
(72) Inventeur: CURSOUX, Bruno, 69440 Mornant (FR); TABONET, Didier, 69600 Oullins (FR)
(74) Mandataire: Verriest, Philippe
(86) Numéro de dépôt international: PCT/FR2010/052539
(87) Numéro de publication internationale: WO 2011/089326

(56) Documents cités:
- EP-A1- 1 447 035
- EP-A2- 1 870 006
- US-A1- 2004 216 621

## Description

La présente invention concerne un barbecue à gaz.

Un barbecue à gaz comprend de façon connue une cuve ou puits de cuisson, un brûleur contenu dans la cuve et comprenant un ensemble d'orifices d'éjection de gaz destiné à être brulé, ainsi qu'une grille de cuisson disposée en travers d'une ouverture supérieure de la cuve. La grille de cuisson est destinée à servir de support aux aliments à griller.

Un élément intermédiaire est disposé entre le brûleur et la grille, cet élément intermédiaire pouvant notamment être constitué par une couche de pierres de lave ou un élément métallique présentant des ouvertures, afin d'empêcher la remontée de flamme due à la chute de graisse à partir de la grille de cuisson sur le brûleur.

Le document US4403597 décrit un tel type de barbecue.

De plus, il est connu du document US 2004/216621 A1 de disposer d'un barbecue à gaz comportant :
- une cuve ou puits de cuisson ;
- un brûleur contenu dans la cuve et comprenant un ensemble d'orifices d'éjection de gaz destiné à être brulé,
- une grille de cuisson disposée en travers d'une ouverture supérieure de la cuve,
la grille de cuisson comportant des parties pleines, et
les orifices d'éjection de gaz étant disposés en dessous des parties pleines de la grille de cuisson et étant orientés vers le haut en direction des parties pleines de la grille de cuisson.

Les dispositifs connus engendrent une consommation de gaz importante qu'il est souhaitable de réduire, tout en conservant une température de cuisson satisfaisante au niveau de la grille.

La présente invention a pour but de résoudre tout ou partie des inconvénients mentionnés ci-dessus.

A cet effet, la présente invention a pour objet un barbecue à gaz comportant une cuve ou puits de cuisson, un brûleur contenu dans la cuve et comprenant un ensemble d'orifices d'éjection de gaz destiné à être brulé, et une grille de cuisson disposé en travers d'une ouverture supérieure de la cuve, caractérisé en ce que la grille de cuisson comporte des parties pleines, les orifices d'éjection de gaz sont disposés en dessous des parties pleines de la grille et sont orientés vers le haut en direction des parties pleines de la grille de cuisson, et la distance entre les orifices d'éjection de gaz du brûleur et la grille de cuisson est comprise entre 10 mm et 35 mm.

La proximité du brûleur et de la grille de cuisson ainsi que l'orientation des orifices d'éjection de gaz par rapport à la grille de cuisson permettent de diminuer les déperditions de chaleur en chauffant directement la grille de cuisson à faible distance avec une puissance de chauffage moindre se manifestant par des flammes de faibles dimensions formées depuis les orifices pour l'éjection du gaz du brûleur à gaz, pour une même température de cuisson par rapport à l'état de la technique. La consommation de gaz est ainsi diminuée.

Les parties pleines disposées au dessus des brûleurs évitent que les graisses formant des gouttes tombant du bord de ces parties pleines

Les parties pleines disposées au dessus des brûleurs évitent que les graisses formant des gouttes tombant du bord de ces parties pleines n'entrent en contact avec les orifices d'éjection de gaz. Les graisses tombent directement dans le fond de la cuve, par exemple à l'intérieur d'un bac amovible prévu à cet effet.

Ainsi, les risques d'inflammation des graisses sont réduits et l'usure du brûleur et le bouchage des orifices d'éjection de gaz sont diminués.

Selon un mode de réalisation, la distance entre les orifices d'éjection de gaz du brûleur et la grille de cuisson est comprise entre 10 mm et 30 mm.

Selon le même mode de réalisation, la distance entre les orifices d'éjection de gaz du brûleur et la grille de cuisson est comprise entre 15 mm et 25 mm.

Selon un mode de réalisation, les orifices d'éjection de gaz sont disposés de telle sorte que la distance maximale entre un point de la grille de cuisson et un axe vertical passant par un orifice d'éjection de gaz est inférieure à 100 mm et avantageusement inférieure à 70 mm.

Cette disposition permet d'obtenir une bonne répartition de la chaleur sur l'ensemble de la grille de cuisson.

Selon un mode de réalisation, la surface des orifices d'éjection de gaz est dimensionnée de façon à diffuser un débit de gaz inférieur à 0,30 g/cm²/h de surface de grille de cuisson, avantageusement inférieur à 0,25 g/cm²/h et de préférence inférieur à 0,2 g/cm²/h.

Selon un mode de réalisation, la profondeur entre le fond de la cuve et la grille de cuisson est comprise entre 100 et 150 mm et de préférence compris entre 110 et 125 mm.

Cette disposition permet de fabriquer des barbecues moins hauts car la distance entre le fond de la cuve qui récolte les graisses et le brûleur peut être réduite sans risque d'inflammation des graisses étant donné la plus faible puissance des brûleurs. Ainsi il est possible de diminuer l'encombrement en hauteur du barbecue et donc de réduire les coûts de fabrication lié à la quantité de matière utilisée.

Selon un mode de réalisation, le brûleur est disposé entièrement en dessous des parties pleines de la grille de cuisson.

Cette disposition permet de protéger le brûleur tout entier contre la retombée de graisses.

De toute façon, l'invention sera bien comprise à l'aide de la description qui suit, en référence aux dessins schématiques annexés représentant, à titre d'exemple non limitatif, une forme d'exécution de ce barbecue à gaz.
La figure 1 montre une vue générale du barbecue à gaz.
La figure 2 montre une coupe latérale de la cuve du barbecue de la figure 1.
La figure 3 montre une vue de dessus de la cuve du barbecue de la figure 1.
La figure 4 montre une vue de dessus de l'intérieur de la cuve du barbecue de la figure 1.
La figure 5 montre une coupe longitudinale vue de face de la cuve du barbecue de la figure 1.
La figure 6 montre une coupe longitudinale vue en perspective de dessus de la cuve du barbecue de la figure 1.

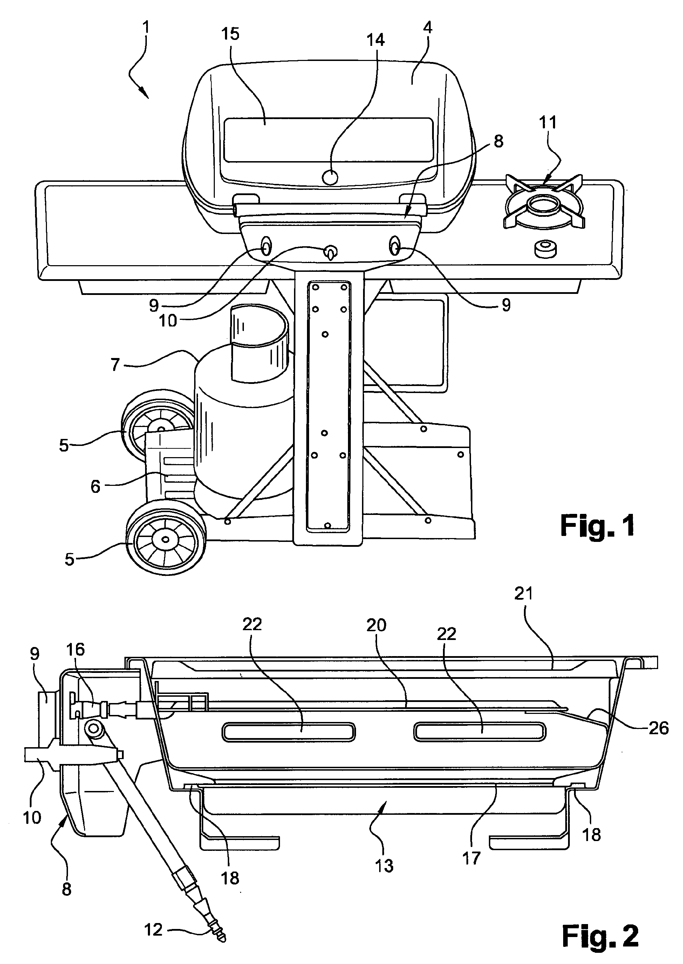

Comme illustré à la figure 1, un barbecue 1 selon un mode de réalisation de l'invention comprend une cuve 2 surmontée d'un couvercle 4, tous deux disposés sur un chariot 3 équipé de roues 5 permettant le déplacement du barbecue 1.

Sur le chariot 3, il est disposé un emplacement 6 pour une bouteille de gaz 7, le gaz étant généralement du butane ou du propane.

A côté de la cuve 2, il est disposé un brûleur additionnel 11 déporté, du type de ceux équipant une cuisinière à gaz classique, et cela afin d'augmenter les possibilités de cuisson du barbecue 1.

La cuve 2 est maintenue fixe sur le plateau du chariot 3 et comprend sur sa face avant un panneau de commande 8 comprenant des boutons de réglage 9 du débit de gaz et un bouton d'allumage 10 du type piézoélectrique.

La cuve 2 présente une forme générale de parallélépipède avec des bords latéraux bombés selon les deux largeurs du parallélépipède, des bords latéraux droits selon les deux longueurs du parallélépipède, et une face supérieure ouverte. Le fond de la cuve est ensuite découpé formant ainsi un fond creux.

La face ouverte de la cuve 2 est refermée par le couvercle 4 montée en rotation autour de charnières (non illustrés) permettant l'ouverture de la cuve 2 par sa face avant. Le couvercle 4 présente sur sa face avant une partie 15 transparente, pouvant être réalisée par exemple en verre du type Pyrex^{®} permettant d'apercevoir l'intérieur de la cuve 2 lorsque le couvercle 4 est en position refermée. Le couvercle 4 présente également sur sa face avant un indicateur de température 14.

Comme illustré aux figures 2 à 6, la cuve 2 du barbecue 1 selon le mode de réalisation présenté, comprend deux brûleurs 20 adjacents reliés à une canalisation 16 comprenant un embout 12 de connexion pour un flexible (non illustré) destiné à être relié à un détendeur (non illustré) connecté à la bouteille de gaz 7.

La canalisation 16 est disposée de manière fixe à l'intérieur du panneau de commande 8 et la rotation des boutons de réglage 9 permet d'ouvrir ou de fermer le passage dans cette canalisation 16 et donc d'ajuster le débit de gaz à l'intérieur de chacun des brûleurs 20.

Le fond de la cuve 2 comprend deux ouvertures débouchant chacune dans un bac de récupération de graisses 13 comprenant une lèvre circonférentielle latérale lui permettant de coulisser librement sur des rails solidaires du fond de la cuve 2.

Afin de réaliser une bonne combustion, des entrées d'air 22 sont également ménagées sur les parois latérales de la cuve 2.

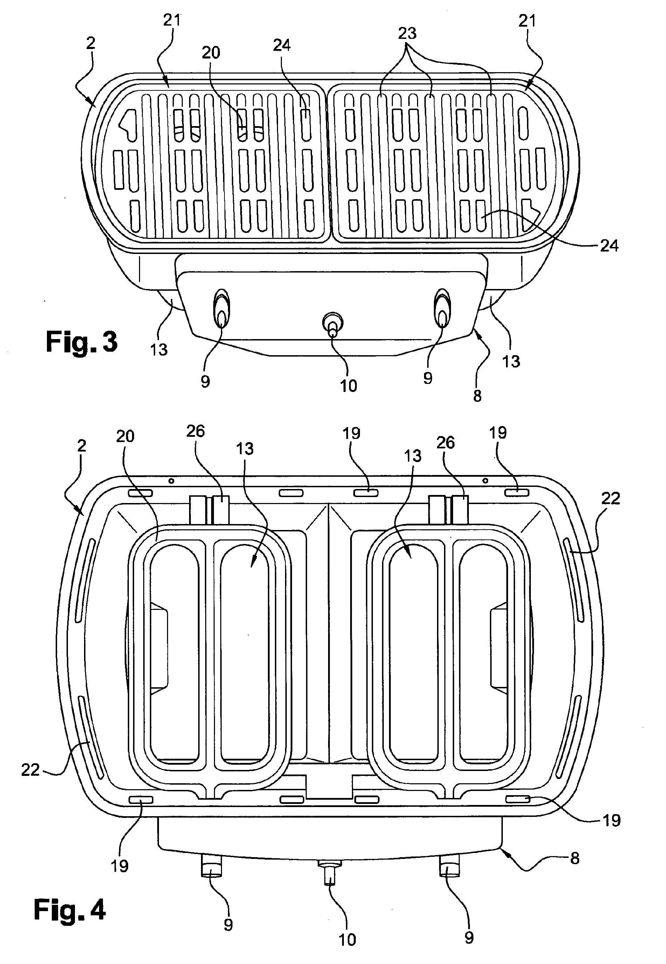

Comme il apparait à la figure 4, chaque brûleur 20 comporte une paroi délimitant un conduit intérieur de passage de gaz.

La paroi de chaque brûleur 20 comprend une multitude d'orifices 25 d'éjection de gaz orientés verticalement en direction de l'ouverture supérieure de la cuve 2.

La paroi est formée par une forme supérieure comprenant une portion bombée rapportée sur une forme inférieure également de forme bombée, les deux formes étant fixées par leurs bords respectifs. Les orifices 25 sont ménagés dans la portion bombée de la forme supérieure.

Chaque brûleur 20 définit ainsi un parcours pour le passage de gaz formant un rectangle arrondi sur ses angles avec une branche de liaison entre les milieux des deux largeurs du rectangle.

Une patte de support 26 du brûleur s'étend entre la branche de liaison entre les milieux des deux largeurs du rectangle et la face intérieure de la cuve 2. Le brûleur prend appui par ailleurs sur la canalisation 16.

La cuve 2 est refermée par une grille 21 formée de deux parties adjacentes dont la disposition côte-à-côte prend la forme du contour de l'ouverture supérieure de la cuve 2.

Les parties de grille 21 sont simplement posées selon un plan sur des épaulements 19 ménagés sur la surface intérieure de la cuve 2 et maintenues latéralement par la portion de la surface interne de la cuve 2 se trouvant située au dessus des épaulements 19.

Ces deux grilles 21 possèdent des parties pleines 23 disposées au dessus des conduits formant les longueurs et les largeurs de la forme de rectangle des deux brûleurs ainsi que du conduit joignant les deux largeurs du rectangle sur leur milieu.

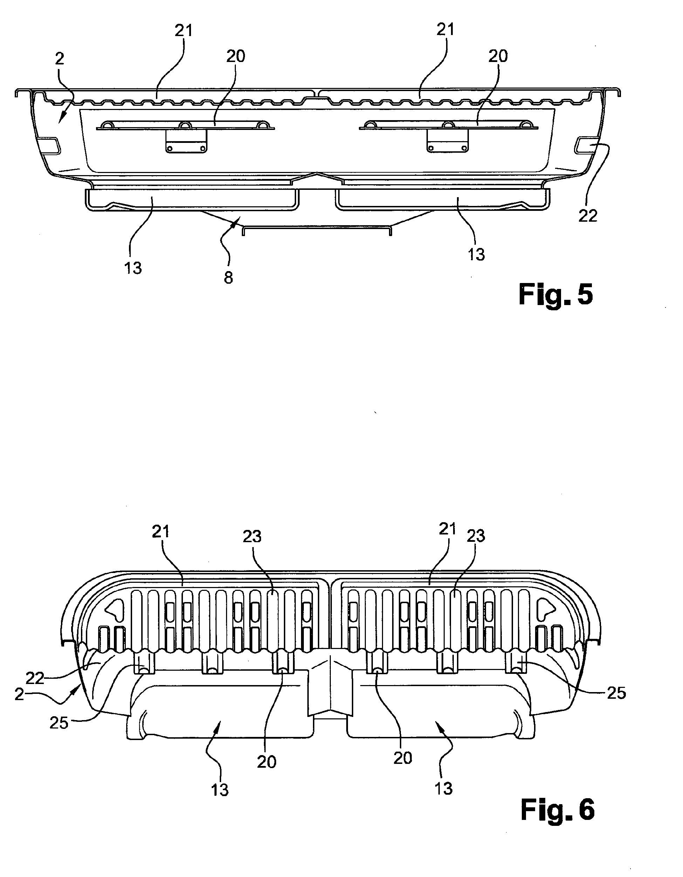

Comme montré à la figure 6, ces parties pleines 23 des deux grilles 21 de cuisson présentent une section ondulée.

Les autres parties des grilles 23 sont formées par des passages 24 de forme oblongue.

Les orifices 25 d'éjection de gaz des brûleurs 20 sont orientés en direction des parties pleines 23 des grilles 21 de telle sorte que le point de la grille 21 de cuisson le plus éloigné de la verticale d'un orifice d'éjection de gaz est de 70 mm.

La largeur de ces parties pleines 23 ainsi que le contour des grilles 21 permet de recouvrir complètement les brûleurs 20 lorsque la cuve 2 est vue de dessus.

La distance verticale entre un brûleur 20 et la grille de cuisson 21 le recouvrant est de l'ordre de 18 mm dans l'exemple représenté au dessin.

Lors de l'utilisation du barbecue 1 selon l'invention, l'utilisateur commence par ouvrir la bouteille de gaz 7 puis à tourner le bouton de réglage 9 du débit de gaz circulant à l'intérieur du brûleur 20 qu'il veut allumer. Il est bien entendu que pour allumer les deux brûleurs 20, l'utilisateur tournera le deuxième bouton de réglage 9 de débit.

Le gaz s'échappe alors au travers de la multitude d'orifice 25 d'éjection de gaz disposés sur les brûleurs 20.

Pour l'allumage, il suffit à l'utilisateur d'appuyer sur le bouton d'allumage 10 piézoélectrique afin de créer une étincelle entrainant la combustion du gaz.

Des flammes se propagent alors de proche en proche jusqu'à enflammer l'ensemble du gaz s'échappant par les orifices 25 d'éjection de gaz du brûleur 20.

Ces flammes obtenues sont de petite taille étant donné la faible section des orifices 25 d'éjection de gaz.

Les parties pleines 23 des grilles 21 présentent une section ondulée.

Une partie de la chaleur s'échappe par les passages 24 de forme oblongue disposés sur les grilles 21 et d'une manière générale la chaleur se répartie de façon uniforme sur les grilles 21 par conduction et convection thermique.

Ainsi, les aliments sont cuits d'une façon uniforme quelque soit leur localisation sur la surface des grilles 21 avec une consommation de gaz réduite.

La graisse de ces aliments s'écoule au travers les passages 24 de forme oblongue disposés sur les grilles 21, et éventuellement de l'interface entre les grilles 21, sans couler sur les brûleurs 20 qui sont occultés par les parties pleines 23 des grilles 21 ce qui réduit les risques d'inflammation des graisses mais aussi prolonge la durée de vie et espace les nettoyages du barbecue 1.

Cette graisse goutte depuis les grilles de cuisson 21 jusqu'aux bacs de récupération des graisses 13 à partir desquels elle peut être évacuée après utilisation du barbecue 1.

De part les caractéristiques techniques exposées ci-dessus, selon un exemple de réalisation d'un barbecue 1 selon l'invention, la consommation de gaz par heure en fonction de la surface de grille de cuisson est inférieure à 0,2 g/cm²/h, la puissance fournie par heure en fonction de la surface de grille de cuisson est inférieure à 2,8 W/cm²/h, la consommation de gaz par heure en fonction de la section de sortie du brûleur est inférieure à 0,22 g/mm²/h et la puissance fournie par heure en fonction de la section de sortie du brûleur est inférieure à 3 W/mm²/h.

Ainsi, la consommation de gaz peut être réduite jusqu'à près de 50 % par rapport à un barbecue de l'état de la technique.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

Ainsi, les brûleurs 20 et les grilles 21 peuvent revêtir plusieurs formes sans pour autant sortir du cadre de l'invention.

## Revendications

1. Barbecue (1) à gaz comportant :
- une cuve (2) ou puits de cuisson ;
- un brûleur (20) contenu dans la cuve et comprenant un ensemble d'orifices (25) d'éjection de gaz destiné à être brulé, et
- une grille de cuisson (21) disposé en travers d'une ouverture supérieure de la cuve (2),
la grille de cuisson (21) comportant des parties pleines (23), et
les orifices (25) d'éjection de gaz étant disposés en dessous des parties pleines (23) de la grille de cuisson (21) et étant orientés vers le haut en direction des parties pleines (23) de la grille de cuisson (21), et
ledit barbecue à gaz (1) étant **caractérisé en ce que** :
- la distance entre les orifices (25) d'éjection de gaz du brûleur (20) et la grille de cuisson (21) est comprise entre 10 mm et 35 mm.

2. Barbecue (1) selon la revendication 1, dans lequel la distance entre les orifices (25) d'éjection de gaz du brûleur (20) et la grille de cuisson (21) est comprise entre 10 mm et 30 mm

3. Barbecue (1) selon la revendication 2, dans lequel la distance entre les orifices (25) d'éjection de gaz du brûleur (20) et la grille de cuisson (21) est comprise entre 15 mm et 25 mm.

4. Barbecue (1) selon l'une des revendications précédentes dans lequel les orifices (25) d'éjection de gaz sont disposés de telle sorte que la distance maximale entre un point de la grille de cuisson (21) et un axe vertical passant par un orifice d'éjection de gaz est inférieure à 100 mm.

5. Barbecue (1) selon la revendication 4, dans lequel la distance maximale entre un point de la grille de cuisson (21) et un axe vertical passant par un orifice d'éjection de gaz est inférieure à 70 mm.

6. Barbecue (1) selon l'une des revendications précédentes, dans lequel la surface des orifices (25) de gaz est dimensionnée de façon à diffuser un débit de gaz inférieur à 0.30 g/cm2/h de surface de grille de cuisson (21).

7. Barbecue (1) selon l'une des revendications précédentes, dans lequel la profondeur entre le fond de la cuve (2) et la grille de cuisson (21) est comprise entre 100 et 150 mm.

8. Barbecue (1) selon l'une de revendications précédentes dans lequel le brûleur (20) est disposé entièrement en dessous des parties pleines (23) de la grille de cuisson (21).

## Patentansprüche

1. Gas-Barbecue (1), umfassend:
- einen Kochkessel (2) oder -schacht;
- einen Brenner (20), der im Kessel enthalten ist und eine Einheit von Öffnungen (25) zum Ausstoß von Gas umfasst, das dazu bestimmt ist, verbrannt zu werden, und
- einen Kochrost (21), der über einer oberen Öffnung des Kessels (2) angeordnet ist,
wobei der Kochrost (21) ebene Teile (23) umfasst, und
wobei die Öffnungen (25) zum Ausstoß von Gas unter den ebenen Teilen (23) des Kochrosts (21) angeordnet sind und nach oben in Richtung der ebenen Teile (23) des Kochrosts (21) ausgerichtet sind, und
der Gas-Barbecue (1) **dadurch gekennzeichnet ist, dass**:
- der Abstand zwischen den Öffnungen (25) zum Ausstoß von Gas des Brenners (20) und dem Kochrost (21) zwischen 10 mm und 35 mm liegt.

2. Barbecue (1) nach Anspruch 1, wobei der Abstand zwischen den Öffnungen (25) zum Ausstoß von Gas des Brenners (20) und dem Kochrost (21) zwischen 10 mm und 30 mm liegt.

3. Barbecue (1) nach Anspruch 2, wobei der Abstand zwischen den Öffnungen (25) zum Ausstoß von Gas des Brenners (20) und dem Kochrost (21) zwischen 15 mm und 25 mm liegt.

4. Barbecue (1) nach einem der vorhergehenden Ansprüche, wobei die Öffnungen (25) zum Ausstoß von Gas derart angeordnet sind, dass der maximale Abstand zwischen einem Punkt des Kochrosts (21) und einer vertikalen Achse, die durch eine Öffnung zum Ausstoß von Gas verläuft, geringer als 100 mm ist.

5. Barbecue (1) nach Anspruch 4, wobei der maximale Abstand zwischen einem Punkt des Kochrosts (21) und einer vertikalen Achse, die durch eine Öffnung zum Ausstoß von Gas verläuft, geringer als 70 mm ist.

6. Barbecue (1) nach einem der vorhergehenden Ansprüche, wobei die Fläche der Gasöffnungen (25) so abgemessen ist, dass ein Gasdurchsatz von weniger als 0,30 g/cm²/h der Fläche des Kochrosts (21) zerstäubt wird.

7. Barbecue (1) nach einem der vorhergehenden Ansprüche, wobei die Tiefe zwischen dem Boden des Kessels (2) und dem Kochrost (21) zwischen 100 und 150 mm liegt.

8. Barbecue (1) nach einem der vorhergehenden Ansprüche, wobei der Brenner (20) vollständig unter den ebenen Teilen (23) des Kochrosts (21) angeordnet ist.

## Claims

1. A gas barbecue (1) including:
- a tank (2) or cooking shaft;
- a burner (20) contained in the tank and comprising a set of orifices (25) for ejecting gases intended to be burnt, and
- a cooking grid (21) positioned across an upper opening of the tank (2), the cooking grid (21) including a solid portions (23), and
the gas ejection orifices (25) being positioned below the solid portions (23) of the cooking grid (21) and being oriented upwards towards the solid portions(23) of the cooking grid (21), and
said gas barbecue (1) being **characterized in that**:
- the distance between the gas ejection orifices (25) of the burner (20) and the cooking grid (21) is comprised between 10 mm and 35 mm.

2. The barbecue (1) according to claim 1, wherein the distance between the gas ejection orifices (25) of the burner (20) and the cooking grid (21) is comprised between 10 mm and 30 mm.

3. The barbecue (1) according to claim 2, wherein the distance between the gas ejection orifices (25) of the burner (20) and the cooking grid (21) is comprised between 15 mm and 25 mm.

4. The barbecue (1) according to one of the preceding claims, wherein the gas ejection orifices (25) are positioned so that the maximum distance between one point of the cooking grid (21) and a vertical axis passing through a gas ejection orifice is less than 100 mm.

5. The barbecue (1) according to claim 4, wherein the maximum distance between one point of the cooking grid (21) and a vertical axis passing through a gas ejection orifice is less than 70 mm.

6. The barbecue (1) according to one of the preceding claims, wherein the surface of the gas orifices (25) is dimensioned so as to diffuse a gas flow rate of less than 0.30 g/cm²/h of cooking grid (21) surface area.

7. The barbecue (1) according to one of the preceding claims, wherein the depth between the bottom of the tank (2) and the cooking grid (21) is comprised between 100 and 150 mm.

8. The barbecue (1) according to one of the preceding claims, wherein the burner (20) is entirely positioned below the solid portions (23) of the cooking grid (21).
